# EUROPEAN PATENT APPLICATION

(11) **EP 4 657 076 A1**
(43) Date of publication of application: **03.12.2025**
(21) Application number: 24747177.4
(22) Date of filing: 16.01.2024
(51) Int. Cl.: G01N 35/10

(54) **AUTOMATIC ANALYSIS DEVICE**

(30) Priority: 23.01.2023 JP 2023007972
(71) Applicant: HITACHI HIGH-TECH CORPORATION, Tokyo 105-6409 (JP)
(72) Inventor: FUKAYA, Masashi, Tokyo 105-6409 (JP)
(74) Representative: MERH-IP Matias Erny Reichl Hoffmann Patentanwälte PartG mbB
(86) International application number: PCT/JP2024/001015
(87) International publication number: WO 2024/157846

(57) **Abstract**

Provided is an automatic analyzer capable of preventing a reagent or the like from being thinned even when the reagent or the like is repeated dispensing. In the automatic analyzer including a dispensing mechanism configured to dispense the reagent or a sample into a reaction container by operating a syringe connected to a nozzle, after the syringe performs an operation of aspirating a predetermined amount of the reagent or the sample in a state where the nozzle is immersed under a liquid surface in a reagent container or a sample container, the syringe performs an air aspiration operation of aspirating air and an air discharge operation of discharging a part of the aspirated air during movement of the nozzle from the reagent container or the sample container to the reaction container, and after the nozzle moves to the reaction container, the syringe performs an operation of discharging a rest of the aspirated air and the predetermined amount of the reagent or the sample to the reaction container.

## Description

### Technical Field

The present invention relates to an automatic analyzer.

### Background Art

An automatic analyzer for analyzing a biological sample such as blood or urine includes a dispensing mechanism for dispensing a sample or a reagent into a reaction container. The dispensing mechanism aspirates or discharges the sample or the reagent by operating a syringe connected to a nozzle. However, in the syringe, there is a mechanically backlash accompanying with slight idling between an aspiration operation and a discharge operation. Therefore, in order to accurately dispense the sample or the reagent, it is required to remove the backlash before discharge. For example, PTL 1 discloses a technique for measuring a backlash amount that varies for each device and optimizing a backlash avoidance operation.

### Citation List

### Patent Literature

PTL 1: JP2020-143927A

### Summary of Invention

### Technical Problem

However, in the automatic analyzer disclosed in PTL 1, not only an aspiration operation but also a discharge operation (discharge for avoiding a backlash) is performed in a state where a nozzle is immersed under a liquid surface of a liquid such as a reagent. Here, since an inner side of the nozzle is filled with system water for propagating pressure of the syringe, an aspirated reagent or the like is diluted by water remaining on an inner wall of the nozzle. When the diluted reagent or the like is discharged back to a reagent container or the like to avoid a backlash, a reagent or the like in the container is also diluted. When the number of times of dispensing increases (for example, increase to several thousand times) and the reagent is repeatedly discharged back to the reagent container, an amount of water brought into the container cannot be ignored, and a concentration of the reagent or the like decreases, which may affect measurement accuracy.

The invention has been made in view of such problems, and an object of the invention is to provide an automatic analyzer capable of preventing a reagent or the like from being diluted even when dispensing of the reagent or the like is repeated.

### Solution to Problem

In order to solve the problem described above, the invention provides an automatic analyzer including a dispensing mechanism configured to dispense a reagent or a sample into a reaction container by operating a syringe connected to a nozzle. After the syringe performs an operation of aspirating a predetermined amount of the reagent or the sample in a state where the nozzle is immersed under a liquid surface in a reagent container or a sample container, the syringe performs an air aspiration operation of aspirating air and an air discharge operation of discharging a part of the aspirated air during movement of the nozzle from the reagent container or the sample container to the reaction container, and after the nozzle moves to the reaction container, the syringe performs an operation of discharging a rest of the aspirated air and the predetermined amount of the reagent or the sample to the reaction container.

### Advantageous Effects of Invention

According to the present invention, it is possible to provide an automatic analyzer capable of preventing a reagent or the like from being diluted even when dispensing of the reagent or the like is repeated.

### Brief Description of Drawings

[FIG. 1] FIG. 1 is a diagram schematically showing an overall configuration of an automatic analyzer.
[FIG. 2] FIG. 2 is a diagram schematically showing a flow path configuration of a reagent dispensing mechanism and reagent bottles.
[FIG. 3] FIG. 3 is a diagram showing an example of an operation sequence of dispensing a reagent in an automatic analyzer according to a comparative example.
[FIG. 4] FIG. 4 is a time chart of dispensing the reagent in the automatic analyzer according to the comparative example.
[FIG. 5] FIG. 5 is a diagram showing a transition of a measurement value measured by the automatic analyzer according to the comparative example.
[FIG. 6] FIG. 6 is a diagram showing an example of an operation sequence of dispensing a reagent in an automatic analyzer according to Embodiment 1.
[FIG. 7] FIG. 7 is a time chart of dispensing the reagent in the automatic analyzer according to Embodiment 1.
[FIG. 8] FIG. 8 is a diagram showing a transition of a measurement value measured by the automatic analyzer according to Embodiment 1.
[FIG. 9] FIG. 9 is a diagram showing an example of an operation sequence of dispensing a reagent in an automatic analyzer according to Embodiment 2.
[FIG. 10] FIG. 10 is a time chart of dispensing the reagent in the automatic analyzer according to Embodiment 2.

### Description of Embodiments

Hereinafter, embodiments of the invention will be described with reference to the drawings.

### (Overall Configuration of Automatic Analyzer)

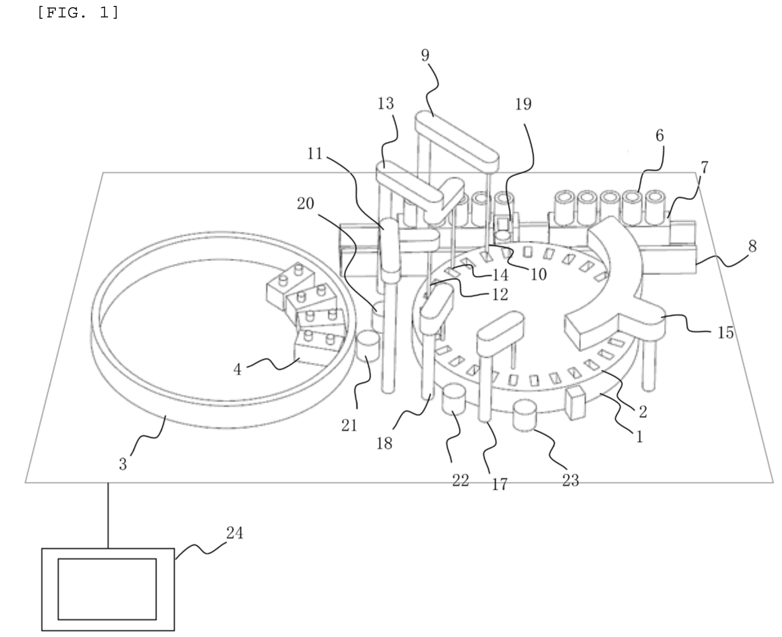

An automated analyzer is a device that dispenses a sample such as blood and urine and a reagent into a reaction container 2 to cause the sample and the reagent to react with each other, and that measures a liquid obtained by reacting the reagent and the sample. FIG. 1 is a diagram schematically showing an overall configuration of an automatic analyzer according to the present embodiment. As shown in FIG. 1, the automatic analyzer includes a sample transport mechanism 8, a reagent disk 3, a reaction disk 1, a sample dispensing mechanism 9, reagent dispensing mechanisms 11 and 13, stirring mechanisms 17 and 18, a spectrophotometer 16 (measurement unit), a cleaning mechanism 15, a control unit 24, and the like.

The reaction containers 2 are arranged circumferentially on the reaction disk 1. The reaction container 2 is a container for storing a mixed liquid obtained by mixing a sample and a reagent, and a plurality of the reaction containers 2 are arranged on the reaction disk 1. The sample transport mechanism 8 is disposed near the reaction disk 1, and the sample transport mechanism 8 transports a sample rack 7 mounted with a plurality of sample containers 6 each containing a sample to be analyzed. The reaction container 2 is immersed in a reaction tank 5 filled with a thermally conductive medium (for example, constant-temperature water) whose temperature is controlled to, for example, 37 °C, and the temperature of the reaction container 2 is constantly maintained at 37 °C by circulating the constant-temperature water in the reaction tank 5.

A plurality of reagent bottles 4 (reagent containers) each containing a reagent to be used for analysis can be placed on the circumference of the reagent disk 3, and the reagent disk 3 also has a function serving as a refrigerator for cooling the reagent bottles 4.

The sample dispensing mechanism 9 for dispensing a sample from the sample container 6 to the reaction container 2 is disposed between the reaction disk 1 and the sample transport mechanism 8. The sample dispensing mechanism 9 is rotatable in a horizontal direction and movable in an upper-lower direction, and includes a sample nozzle 10 having a tip end facing downward. A cleaning tank 19 for cleaning the sample nozzle 10 with cleaning water is disposed in an operating range of the sample dispensing mechanism 9. The reagent dispensing mechanisms 11 and 13 for dispensing a reagent from the reagent bottles 4 to the reaction container 2 are disposed between the reaction disk 1 and the reagent disk 3. The reagent dispensing mechanisms 11 and 13 are rotatable in the horizontal direction and movable in the upper-lower direction, and the reagent dispensing mechanisms 11 and 13 include respective reagent nozzles 12 and 14 each having a tip end facing downward. Cleaning tanks 20 and 21 for cleaning the respective reagent nozzles 12 and 14 with cleaning water are disposed in operating ranges of the reagent dispensing mechanisms 11 and 13.

The stirring mechanisms 17 and 18, the spectrophotometer 16 for measuring absorbance of a reaction liquid by measuring light from a light source (not shown) transmitted through the reaction liquid in the reaction container 2, the cleaning mechanism 15 for cleaning the used reaction container 2, and the like are disposed around the reaction disk 1.

The stirring mechanisms 17 and 18 are rotatable in the horizontal direction and movable in the upper-lower direction, and stir a mixed liquid (reaction liquid) of the sample and the reagent by being inserted into the reaction container 2. Cleaning tanks 22 and 23 for cleaning the stirring mechanisms 17 and 18 with cleaning water are disposed in operating ranges of the stirring mechanisms 17 and 18.

The control unit 24 is implemented by a computer or the like, controls an operation of each mechanism constituting the automatic analyzer, and executes calculation processing for obtaining a concentration of a predetermined component in the sample. In FIG. 1, a connection relationship between each mechanism constituting the automatic analyzer and the control unit 24 is omitted for simplicity of illustration.

In the automatic analyzer configured as described above, analysis processing is generally performed in the following flow. First, the control unit 24 controls the sample nozzle 10 of the sample dispensing mechanism 9 to dispense a sample in the sample container 6 placed on the sample rack 7, the sample container 6 being transported to the vicinity of the reaction disk 1 by the sample transport mechanism 8, into the reaction container 2 on the reaction disk 1. Thereafter, the control unit 24 cleans the sample nozzle 10 in the cleaning tank 19. Next, the control unit 24 controls the reagent nozzles 12 and 14 of the reagent dispensing mechanisms 11 and 13 to dispense a reagent in the reagent bottle 4 on the reagent disk 3 into the reaction container 2 into which the sample was previously dispensed. Thereafter, the control unit 24 cleans the reagent nozzles 12 and 14 in the cleaning tanks 20 and 21.

Subsequently, the control unit 24 controls the stirring mechanisms 17 and 18 to stir a mixed liquid of the sample and the reagent in the reaction container 2. Thereafter, light generated from a light source is transmitted through the reaction container 2 containing the mixed liquid, and the control unit 24 controls the spectrophotometer 16 to measure an intensity of the transmitted light. Light intensity information measured by the spectrophotometer 16 is transmitted to the control unit 24 via an A/D converter and an interface. Then, the control unit 24 calculates a concentration of a predetermined component of an analysis item based on the received light intensity information, and displays a calculation result on a display unit (not shown) or the like or stores the calculation result in a storage unit (not shown).

### [Configuration of Dispensing Mechanism]

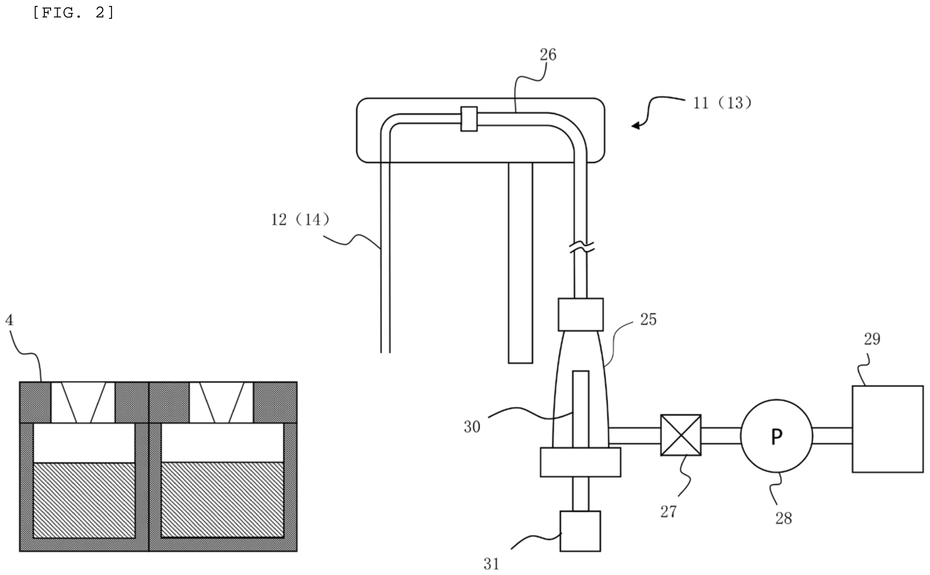

Next, a configuration of a dispensing mechanism will be specifically described with reference to FIG. 2. Hereinafter, the reagent dispensing mechanisms 11 and 13 will be described as an example, and the same applies to the sample dispensing mechanism 9.

FIG. 2 is a diagram schematically showing a flow path configuration of a reagent dispensing mechanism and reagent bottles. The reagent dispensing mechanisms 11 and 13 mainly include the respective reagent nozzles 12 and 14 and a syringe 25, and dispense the reagent in the reagent bottle 4 into the reaction container by operating the syringe 25 connected to the reagent nozzles 12 and 14. Here, the syringe 25 is provided with a plunger 30, and a motor 31 is connected to the plunger 30. The motor 31 drives the plunger 30 to aspirate or discharge a reagent to be dispensed from the reagent nozzles 12 and 14.

A flow path from the reagent nozzles 12 and 14 to a water supply pump 29 via the syringe 25, a solenoid valve 27, and a liquid feeding pump 28 is formed by a tube 26, and the flow path is filled with system water. The system water is water used for pressure propagation or the like, and is generally purified water such as ion exchange water. When inner sides of the reagent nozzles 12 and 14 are cleaned, the solenoid valve 27 is opened, and the system water (cleaning water) supplied from the water supply pump 29 is discharged from tip ends of the reagent nozzles 12 and 14.

When the reagent dispensing mechanisms 11 and 13 dispense reagents, first, the reagent nozzles 12 and 14 are moved to a position (reagent aspirating position) where the reagents are aspirated from the reagent bottles 4 while maintaining a state where the solenoid valve 27 is closed. Next, in a state where the tip ends of the reagent nozzles 12 and 14 reach liquid surfaces of the reagents, the plunger 40 is driven in an aspiration direction to aspirate the reagents into the reagent nozzles 12 and 14. Thereafter, the reagent nozzles 12 and 14 are moved to a position (reagent discharge position) where the reagents are discharged into the reaction container 2, and in this state, the plunger 40 is driven in a discharge direction to discharge the reagents into the reaction container 2. After the reagent dispensing mechanisms 11 and 13 dispense the reagents, the reagent nozzles 12 and 14 are moved to the cleaning tanks 20 and 21, and inner cleaning and outer cleaning of the reagent nozzles 12 and 14 are performed.

The reagent bottle 4 is filled with a specified amount of reagent. The specified amount is an amount obtained by adding a dead volume, that is, a reagent that remains at the bottom of the bottle and cannot be used for analysis to a dispensing amount determined as an analysis parameter × the number of analyzable tests. FIG. 2 shows an example of reagent bottles in which two types of reagents are set, and the number of analyzable tests varies for each reagent.

Next, an operation of the reagent dispensing mechanism will be described in detail.

### (Comparative Example)

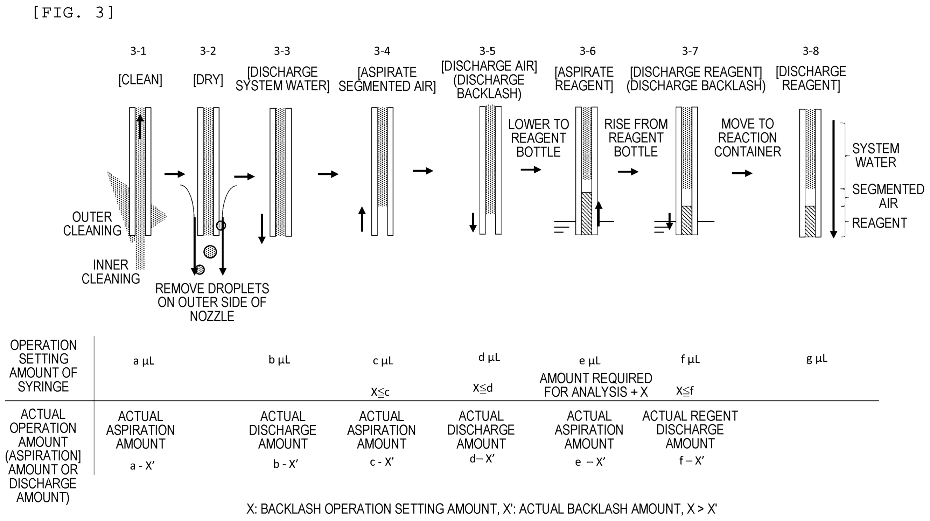

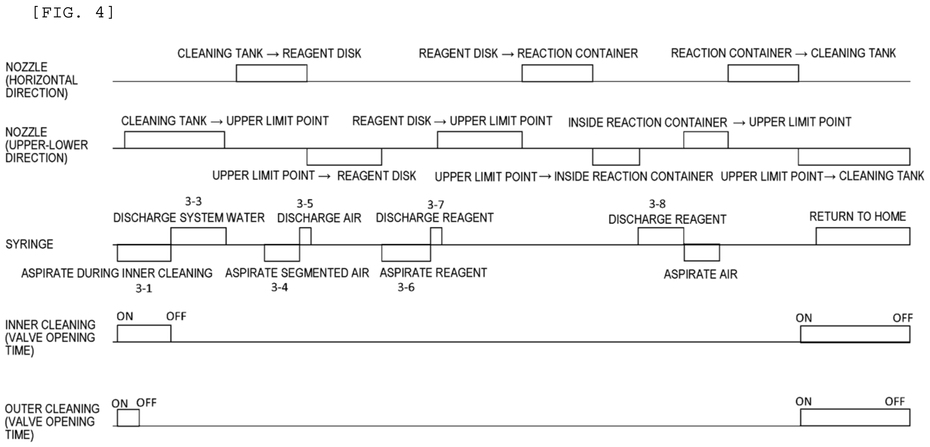

First, a case where a reagent is dispensed using an automatic analyzer in the related art will be described as a comparative example with reference to FIGS. 3 to 5. FIG. 3 is a diagram showing an example of an operation sequence of reagent dispensing in the automatic analyzer according to the comparative example, and FIG. 4 is a time chart of dispensing the reagent in the automatic analyzer according to the comparative example.

First, in a clean step 3-1, inner cleaning and outer cleaning of the reagent nozzles 12 and 14 are performed in the cleaning tanks 20 and 21 with cleaning water supplied from the liquid feeding pump 28. During inner cleaning of the reagent nozzles 12 and 14, an aspiration operation of the syringe 25 is performed, and an amount of the system water to be discharged in a system water discharge step 3-3 and a reagent discharge step 3-8 which will be described later is ensured. An operation setting amount of the syringe 25 in the clean step 3-1 is an operation amount (aspiration amount) corresponding to a µL. However, there is a gap between mechanisms constituting the syringe 25, and when the syringe 25 operates in a direction opposite to an immediately preceding operation, a backlash appears as slight idling. Although not shown in FIG. 3, there is a home return which is an operation in a discharge direction before the clean step 3-1. Therefore, when a backlash amount actually generated in the syringe 25 according to the comparative example (hereinafter, may be simply referred to as an "actual backlash amount") is X', an actual aspiration amount in the clean step 3-1 is a - X'. The actual backlash amount X' varies from syringe to syringe.

Next, in a dry step 3-2, water droplets adhering to outer sides of the reagent nozzles 12 and 14 are removed. In the case of an automatic analyzer having no drying function, the dry step 3-2 is omitted.

Here, when pressure generated by the liquid feeding pump 28 is cut off by closing the solenoid valve 27 at the end of the cleaning in the clean step 3-1, a part of the system water is discharged from tip ends of the reagent nozzles 12 and 14 by residual pressure in the reagent nozzles 12 and 14. At this time, air is drawn into the reagent nozzles 12 and 14 instead of the discharged system water. As a result, the tip ends of the reagent nozzles 12 and 14 may become in an unstable state due to generation of air bubbles or the like. In order to solve this problem, the system water existing at the tip ends of the reagent nozzles 12 and 14 is discharged in the system water discharge step 3-3. An operation setting amount of the syringe 25 in the system water discharge step 3-3 is an operation amount (discharge amount) corresponding to b µL, which is smaller than the operation setting amount a µL in the clean step 3-1.

However, in the system water discharge step 3-3, since the syringe 25 operates in a direction opposite to the immediately preceding aspiration operation, an actual backlash amount X' is generated, and an actual discharge amount is b - X'.

Next, while the reagent nozzles 12 and 14 are horizontally moved toward a reagent aspirating position, a segmented air aspiration step 3-4 in which the syringe 25 aspirates segmented air is performed. The segmented air is air that separates the system water and the reagent, and serves as an air layer that prevents the reagent from being diluted due to contact between the reagent and the system water during reagent aspiration. An operation setting amount of the syringe 25 in the segmented air aspiration step 3-4 is an operation amount (aspiration amount) corresponding to c µL. However, in the segmented air aspiration step 3-4, since the syringe 25 operates in a direction opposite to the immediately preceding discharge operation, an actual backlash amount X' is generated, and an actual aspiration amount is c - X'.

Here, when the operation setting amount c µL of the syringe 25 is determined, a maximum backlash amount (hereinafter, simply referred to as a "backlash operation setting amount") X assumed in the design of the syringe 25 according to the comparative example is taken into consideration. Specifically, it is determined that a relationship of an operation setting amount c ≥ the backlash operation setting amount X is satisfied. Since the backlash operation setting amount X is set to a value obtained by adding a margin to a theoretically estimated backlash amount, the backlash operation setting amount X is a value larger than the actual backlash amount X'.

Next, in an air discharge step 3-5, the syringe 25 discharges a part of the segmented air in order to balance a backlash amount generated in the segmented air aspiration step 3-4. An operation setting amount of the syringe 25 in the air discharge step 3-5 is an operation amount (discharge amount) corresponding to d µL, but since an actual discharge amount is reduced by the actual backlash amount X', the actual discharge amount is d - X'. When the operation setting amount d µL is determined, the backlash operation setting amount X is taken into consideration, and a relationship of the operation setting amount d ≥ the backlash operation setting amount X is established. An amount of the segmented air remaining in the reagent nozzles 12 and 14 at the end of the air discharge step 3-5 is (c - X') - (d - X') = c - d µL.

Next, the reagent nozzles 12 and 14 are lowered to the reagent aspirating position, and in a reagent aspiration step 3-6, the syringe 25 aspirates a predetermined amount of reagent in a state where the reagent nozzles 12 and 14 are immersed under a liquid surface in the reagent bottle 4. An operation setting amount of the syringe 25 in the reagent aspiration step 3-6 is an operation amount (aspiration amount) corresponding to e µL, but since an actual aspiration amount is reduced by the actual backlash amount X', the actual aspiration amount is e - X'. The operation setting amount e µL is set by adding the backlash operation setting amount X to a reagent amount required for analysis.

Next, in a reagent discharge (backlash discharge) step 3-7, the syringe 25 discharges a part of the reagent in a state where the reagent nozzles 12 and 14 are immersed under the liquid surface in the reagent bottle 4. The reagent discharge (backlash discharge) step 3-7 is a step for balancing a backlash amount generated in the reagent aspiration step 3-6. An operation setting amount of the syringe 25 in the reagent discharge (backlash discharge) step 3-7 is an operation amount (discharge amount) corresponding to f µL, but since an actual discharge amount is reduced by the actual backlash amount X', the actual discharge amount is f - X'. When the operation setting amount f µL is determined, the backlash operation setting amount X is taken into consideration, and a relationship of the operation setting amount f ≥ the backlash operation setting amount X is established.

Next, the reagent nozzles 12 and 14 are raised, then are moved horizontally to the reagent discharge position, and then are lowered again. Thereafter, in a reagent discharge step 3-8, the syringe 25 discharges the reagent, the segmented air, and the system water into the reaction container 2. An operation setting amount of the syringe 25 in the reagent discharge step 3-8 is an operation amount (discharge amount) corresponding to g µL. In the reagent discharge step 3-8, since the syringe 25 operates in the same direction as the immediately preceding discharge operation, it is not necessary to consider a backlash. M1 is a variation amount of the syringe immediately before the reagent discharge step 3-8 in the comparative example (a final operation amount in an aspiration direction obtained as a result of adding and subtracting an aspiration amount and a discharge amount of a series of operations of the syringe performed from step 3-1 to step 3-7), and M1 can be expressed by the following Formula 1. M1 = (a - X') - (b - X') + (c - X') - (d - X') + (e - X') - (f - X') = a - b + c - d + e - f

That is, since the actual backlash amount X' having an individual difference for each syringe is finally in a balanced state, dispensing accuracy is ensured.

However, in the comparative example, there is a problem that the diluted reagent is discharged back to the reagent bottle 4 in the reagent discharge (backlash discharge) step 3-7. This is because, even when the reagent and the system water are separated by the segmented air, the reagent is actually diluted in the reagent nozzles 12 and 14 by the water remaining on inner walls of the reagent nozzles 12 and 14. A diluting degree varies depending on an amount of the segmented air, an amount of reagent to be aspirated, an aspiration speed, and the like.

For example, when 3 µL of liquid is discharged in the reagent discharge (backlash discharge) step 3-7, 0.3 µL of water is brought into the reagent bottle 4 in one reagent dispensing operation. When the number of times of dispensing of the reagent bottle 4 (the number of analyzable tests) is, for example, 2000, a total amount of water brought into the reagent bottle 4 is 2000 × 0.3 = 600 µL. Therefore, a concentration of the reagent at the time when a remaining amount of the reagent in the reagent bottle 4 reaches the vicinity of a dead volume is diluted to about 12% which is less than the concentration of the reagent before use. Accordingly, when a reagent stock solution in the reagent bottle 4 is 100%, a final concentration is generally diluted to about 90%. That is, a liquid discharged in the reagent discharge (backlash discharge) step 3-7 immediately before replacement of the reagent bottle 4 contains not only the reagent but also about 10% water.

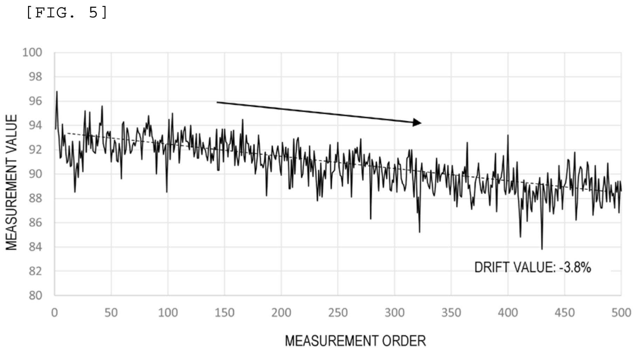

FIG. 5 is a diagram showing a transition of measurement values measured by the automatic analyzer according to the comparative example. FIG. 5 shows results of continuously measuring the same sample 500 times using one reagent bottle. According to FIG. 5, in the case of the comparative example, it can be seen that the measurement values vary in one direction as the number of times of dispensing increases.

In the case of a reagent containing an excessive amount of reactant, even when a concentration of the reagent changes at the time of discharging the reagent into the reaction container, an influence on an analysis result is small, but in the case of a reagent other than such a reagent, the influence on the analysis result cannot be ignored when the concentration changes. A small amount of water is also brought into the reagent bottle 4 due to the water or the like adhering to outer sides of the reagent nozzles 12 and 14 in the reagent aspiration step 3-6. Therefore, in the case of a reagent whose concentration is required to be stabilized at the time of being discharged into the reaction container 2, analysis accuracy may decrease in the comparative example.

Therefore, in an automatic analyzer according to an embodiment, reagent discharge (backlash discharge) is not performed in a state where the reagent nozzles 12 and 14 are immersed under the liquid surface in the reagent bottle 4, and the syringe 25 performs an air aspiration operation of aspirating air and an air discharge operation of discharging a part of the aspirated air when the reagent nozzles 12 and 14 are moved from the reagent bottle 4 to the reaction container 2. Hereinafter, Embodiment 1 and Embodiment 2 will be described in details.

### Embodiment 1

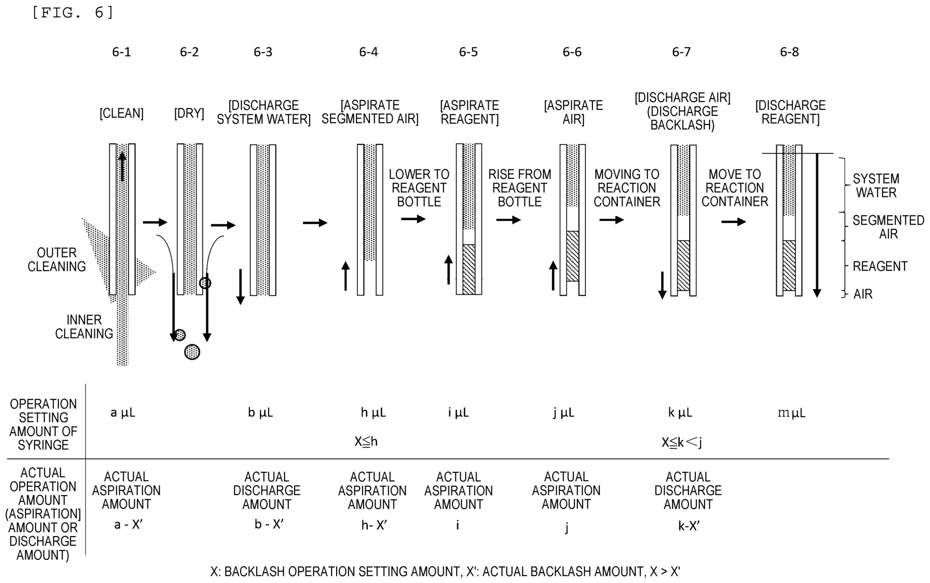

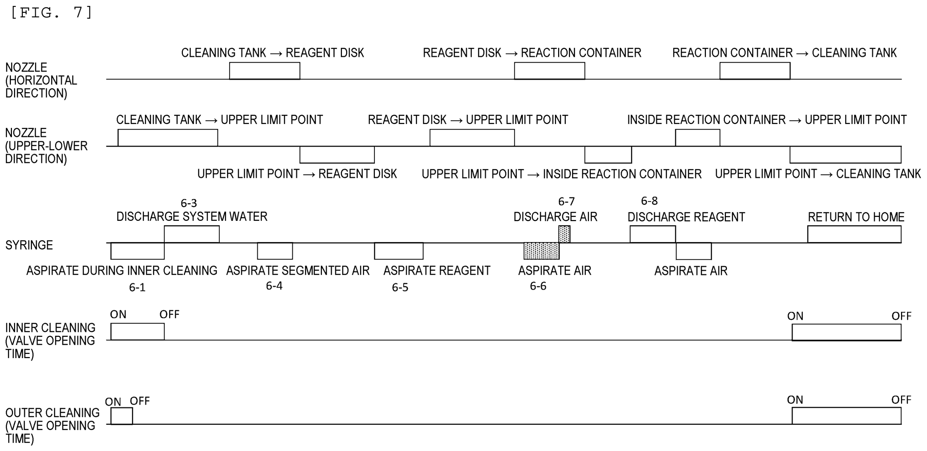

A case of dispensing a reagent using an automatic analyzer according to Embodiment 1 will be described with reference to FIGS. 6 to 8. FIG. 6 is a diagram showing an example of an operation sequence of reagent dispensing in the automatic analyzer according to Embodiment 1, and FIG. 7 is a time chart of dispensing the reagent in the automatic analyzer according to Embodiment 1.

A clean step 6-1, a dry step 6-2, a system water discharge step 6-3, and a segmented air aspiration step 6-4 are the same as the clean step 3-1, the dry step 3-2, the system water discharge step 3-3, and the segmented air aspiration step 3-4 in the comparative example. Different from the comparative example, an operation setting amount of the syringe 25 in the segmented air aspiration step 6-4 is an operation amount (aspiration amount) corresponding to h µL. This is because, in the Embodiment 1, there is no step corresponding to the air discharge step 3-5 in the comparative example.

Next, in a reagent aspiration step 6-5, the syringe 25 aspirates a predetermined amount of reagent in a state where the reagent nozzles 12 and 14 are immersed under the liquid surface in the reagent bottle 4 in a similar manner to the reagent aspiration step 3-6 in the comparative example. Unlike a case of the comparative example, an operation setting amount of the syringe 25 in the reagent aspiration step 6-5 is an operation amount (aspiration amount) corresponding to i µL. This is because, in Embodiment 1, there is no step corresponding to the reagent discharge (backlash discharge) step 3-7 in the comparative example. In the reagent aspiration step 6-5, since the syringe 25 operates in the same direction as the immediately preceding aspiration operation, it is not necessary to consider a backlash. That is, an actual aspiration amount in the reagent aspiration step 6-5 is an operation amount corresponding to i µL.

Next, the reagent nozzles 12 and 14 are raised without performing a reagent discharge operation, and then are horizontally moved toward the reagent discharge position. In Embodiment 1, an air aspiration step 6-6 is performed during the horizontal movement. An operation setting amount of the syringe 25 in the air aspiration step 6-6 is an operation amount (aspiration amount) corresponding to j µL, which is smaller than the operation amount (aspiration amount) i µL in the reagent aspiration step 6-5. This is because when j ≥ i, an influence of air vibration in the reagent nozzles 12 and 14 increases, and a state of the reagent or the system water in the reagent nozzles 12 and 14 becomes unstable. In the air aspiration step 6-6, since the syringe 25 operates in the same direction as the immediately preceding aspiration operation, it is not necessary to consider a backlash. That is, an actual aspiration amount in the air aspiration step 6-6 is an operation amount corresponding to j µL.

Thereafter, the syringe 25 performs an air discharge (backlash discharge) step 6-7 during the horizontal movement of the reagent nozzles 12 and 14. An operation setting amount of the syringe 25 in the air discharge (backlash discharge) step 6-7 is k µL, which is smaller than the operation amount (aspiration amount) j µL in the air aspiration step 6-6. This is because when k ≥ j, the reagent in the reagent nozzles 12 and 14 pops out. However, in the air discharge (backlash discharge) step 6-7, since the syringe 25 operates in a direction opposite to the immediately preceding aspiration operation, the actual backlash amount X' is generated, and an actual discharge amount is k - X'. When the operation setting amount k µL is determined, the backlash operation setting amount X is taken into consideration, and a relationship of the operation setting amount k ≥ the backlash operation setting amount X is established.

Here, since an operation speed of the syringe 25 in the air discharge step 6-7 is lower than an operation speed of the syringe 25 in the reagent aspiration step 6-5, vibration accompanying with air discharge is prevented, and the reagent can be prevented from popping out from the reagent nozzles 12 and 14. It is preferable that an operation speed of the syringe 25 in the air aspiration step 6-6 is lower than the operation speed of the syringe 25 in the reagent aspiration step 6-5 in order to prevent vibration accompanying with air aspiration.

Further, the air aspiration step 6-6 and the air discharge step 6-7 may be performed while the reagent nozzles 12 and 14 are being raised or lowered, but are preferably performed during the horizontal movement in order to prevent vibration of the liquid in the reagent nozzles 12 and 14. In order to prevent vibration of the liquid, it is also important to reduce an amount of air remaining at the tip ends of the reagent nozzles 12 and 14 at the end of the air discharge step 6-7 to be smaller than the segmented air so as to reduce a total amount of air to be aspirated into the reagent nozzles 12 and 14.

Next, when the reagent nozzles 12 and 14 reach the reagent discharge position, the reagent nozzles 12 and 14 are lowered toward the reaction container 2. Thereafter, in a reagent discharge step 6-8, the syringe 25 discharges the air, the reagent, the segmented air, and the system water into the reaction container 2. An operation setting amount of the syringe 25 in the reagent discharge step 6-8 is an operation amount (discharge amount) corresponding to m µL. In the reagent discharge step 6-8, since the syringe 25 operates in the same direction as the immediately preceding discharge operation, it is not necessary to consider a backlash. M2 is a variation amount of the syringe immediately before the reagent discharge step 6-8 in Embodiment 1 (a final operation amount in an aspiration direction obtained as a result of adding and subtracting an aspiration amount and a discharge amount of a series of operations of the syringe performed from step 6-1 to step 6-7), and M2 can be expressed by the following Formula 2. M2 = (a - X') - (b - X') + (h - X') + i + j - (k - X') = a - b + h + i + j - k

That is, since the actual backlash amount X' is finally balanced, dispensing accuracy is ensured.

As described above, in Embodiment 1, since there is no step of discharging the diluted reagent in the reagent nozzles 12 and 14 back to the reagent bottle 4 (backlash discharge of the reagent), an amount of water brought into the reagent bottle 4 is reduced. Since a time spent for reagent aspiration can be increased instead of not performing backlash discharge of the reagent, an aspiration speed can be reduced, and the reagent can be further prevented from being diluted.

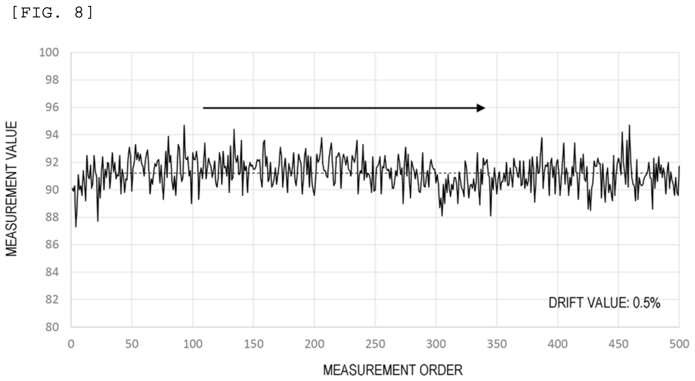

FIG. 8 is a diagram showing a transition of measurement values measured by the automatic analyzer according to Embodiment 1. FIG. 8 shows results of continuously measuring the same sample 500 times using one reagent bottle as in the case of FIG. 5. According to FIG. 8, it can be seen that Embodiment 1 is different from the comparative example in that a variation of the measurement values is small.

### Embodiment 2

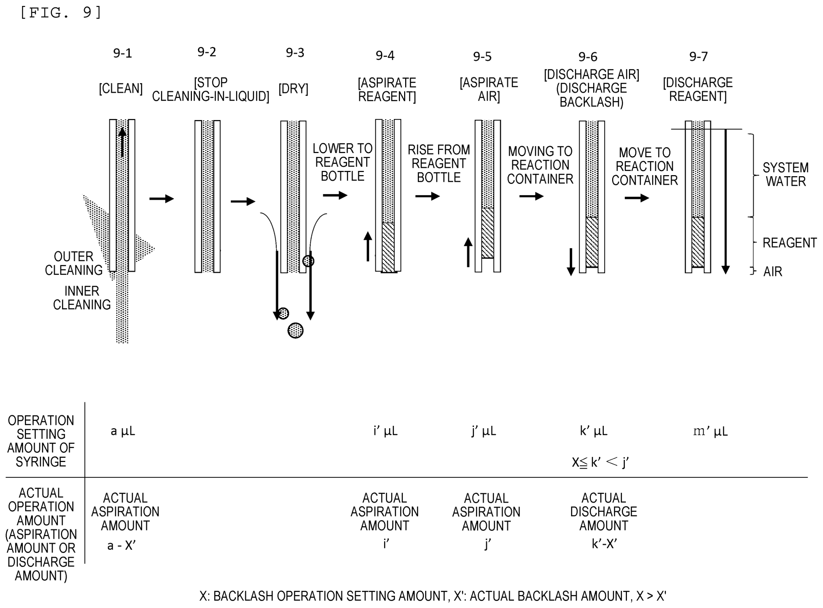

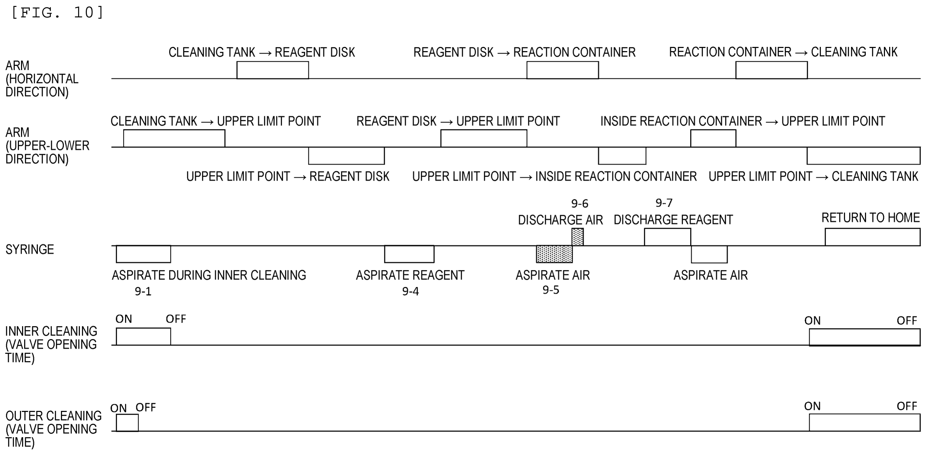

A case of dispensing a reagent using an automatic analyzer according to Embodiment 2 will be described with reference to FIGS. 9 and 10. FIG. 9 is a diagram showing an example of an operation sequence of reagent dispensing in the automatic analyzer according to Embodiment 2, and FIG. 10 is a time chart of dispensing the reagent in the automatic analyzer according to Embodiment 2.

In Embodiment 2, after the cleaning of the reagent nozzles 12 and 14, the syringe 25 aspirates the reagent without aspirating the segmented air. This is because, in reagent dispensing of a water extrusion type in which the reagent is a concentrated reagent and is finally discharged at the same time with the system water, when there is no step of discharging the reagent back to the reagent bottle 4, it is not necessary to consider diluting of the reagent in the reagent nozzles 12 and 14.

A clean step 9-1 is the same as the clean step 3-1 in the comparative example or the clean step 6-1 in Embodiment 1. In Embodiment 2, there is no step corresponding to the system water discharge step 3-3 in the comparative example or the system water discharge step 6-3 in Embodiment 1. Therefore, when bubbles are generated at the tip ends of the reagent nozzles 12 and 14 at the end of cleaning in the clean step 9-1, the bubbles cannot be removed. Therefore, a cleaning-in-liquid stop step 9-2 is performed in Embodiment 2.

The cleaning-in-liquid stop step 9-2 is a step of storing, in the cleaning tanks 20 and 21, the system water (cleaning water) used in inner cleaning of the reagent nozzles 12 and 14 in the clean step 9-1 and stopping the solenoid valve 27 in a state where the tip ends of the reagent nozzles 12 and 14 are immersed in the system water. At this time, although the system water is aspirated into the reagent nozzles 12 and 14 due to residual pressure in the reagent nozzles 12 and 14, since no air is aspirated into the reagent nozzles 12 and 14, no air bubbles are generated. When the system water can be aspirated into the reagent nozzles 12 and 14 instead of air, the solenoid valve 27 may be stopped in a state where the system water for outer cleaning is sprayed on the tip ends of the reagent nozzles 12 and 14 without storing the system water in the cleaning tanks 20 and 21. In the case of a dispensing mechanism capable of gradually lowering pressure in the reagent nozzles 12 and 14 at the end of cleaning, the cleaning-in-liquid stop step 9-2 may be omitted.

A dry step 9-3 is the same as the dry step 3-2 in the comparative example or the dry step 6-2 in Embodiment 1. In Embodiment 2, after the dry step 9-3, a reagent aspiration step 9-4 is performed without discharging the system water or aspirating the segmented air.

In the reagent aspiration step 9-4, the syringe 25 aspirates a predetermined amount of reagent in a state where the reagent nozzles 12 and 14 are immersed under the liquid surface in the reagent bottle 4 in a similar manner to the reagent aspiration step 3-6 in the comparative example or the reagent aspiration step 6-5 in Embodiment 1. However, an operation setting amount of the syringe 25 in the reagent aspiration step 9-4 is an operation amount (aspiration amount) corresponding to i' µL. In the reagent aspiration step 9-4, since the syringe 25 operates in the same direction as the immediately preceding aspiration operation, it is not necessary to consider a backlash. That is, an actual aspiration amount in the reagent aspiration step 9-4 is an operation amount corresponding to i' µL.

Thereafter, similar to Embodiment 1, an air aspiration step 9-5 is performed while the reagent nozzles 12 and 14 are horizontally moved toward the reagent discharge position after the reagent nozzles 12 and 14 are raised without performing the reagent discharge operation. An operation setting amount of the syringe 25 in the air aspiration step 9-5 is an operation amount (aspiration amount) corresponding to j' µL, which is smaller than the operation amount (aspiration amount) i' µL in the reagent aspiration step 9-4. In the air aspiration step 9-5, since the syringe 25 operates in the same direction as the immediately preceding aspiration operation, it is not necessary to consider a backlash. That is, an actual aspiration amount in the air aspiration step 9-5 is an operation amount corresponding to j' µL.

Thereafter, the syringe 25 performs an air discharge (backlash discharge) step 9-6 during the horizontal movement of the reagent nozzles 12 and 14. An operation setting amount of the syringe 25 in the air discharge (backlash discharge) step 9-6 is k' µL, which is smaller than the operation amount (aspiration amount) j' µL in the air aspiration step 9-5. However, in the air discharge (backlash discharge) step 9-6, since the syringe 25 operates in a direction opposite to the immediately preceding aspiration operation, the actual backlash amount X' is generated, and an actual discharge amount is k' - X'. When the operation setting amount k' µL is determined, the backlash operation setting amount X is taken into consideration, and a relationship of the operation setting amount k' ≥ the backlash operation setting amount X is established.

Next, when the reagent nozzles 12 and 14 reach the reagent discharge position, the reagent nozzles 12 and 14 are lowered toward the reaction container 2. Thereafter, in a reagent discharge step 9-7, the syringe 25 discharges the air, the reagent, and the system water into the reaction container 2. An operation setting amount of the syringe 25 in the reagent discharge step 9-7 is an operation amount (discharge amount) corresponding to m' µL. In the reagent discharge step 9-7, since the syringe 25 operates in the same direction as the immediately preceding discharge operation, it is not necessary to consider a backlash. M3 is a variation amount of the syringe immediately before the reagent discharge step 9-7 in Embodiment 2 (a final operation amount in the aspiration direction obtained as a result of adding and subtracting an aspiration amount and a discharge amount of a series of operations of the syringe performed from step 9-1 to step 9-6), and M3 can be expressed by the following Formula 3. M3 = (a - X') + i' + j' - (k' - X') = a + i' + j' - k'

That is, since the actual backlash amount X' is finally balanced, dispensing accuracy is ensured.

As described above, in Embodiment 2, since there is no step of discharging the system water or step of aspirating the segmented air, the operation sequence is simplified as a whole.

### (Appendix)

As described above, according to each embodiment, since the reagent is not discharged back to the reagent bottle 4, the reagent can be prevented from being diluted. As a result, not only the number of analyzable tests of the reagent bottles increases and a replacement frequency of the reagent bottles decreases, but also a variation of measurement values is prevented and reliability of a measurement result is improved, so that a re-measurement risk is reduced and a periodic calibration frequency is reduced. That is, work of a user can be significantly reduced.

It can be said that each embodiment is characterized in that an aspiration operation is continuously performed twice or more by the syringe 25 while the reagent nozzles 12 and 14 are moved from the cleaning tanks 20 and 21 to the reaction container 2 (reagent discharge position) via the reagent bottle 4 (reagent aspirating position). For example, in Embodiment 1, an aspiration operation is continuously performed three times from the segmented air aspiration step 6-4 to the air aspiration step 6-6, and in Embodiment 2, an aspiration operation is continuously performed twice in the reagent aspiration step 9-4 and the air aspiration step 9-5.

The invention is not limited to the embodiments described above, and includes various modifications. For example, although the reagent dispensing of a water extrusion type in which the reagent and the system water are discharged together has been described in each embodiment as an example, the invention can also be applied to reagent dispensing of another type such as a type (dummy dispensing) in which a part of the aspirated reagent is discharged.

### Reference Signs List

- 1:: reaction disk
- 2:: reaction container
- 3:: reagent disk
- 4:: reagent bottle
- 5:: reaction tank
- 6:: sample container
- 7:: sample rack
- 8:: sample transport mechanism
- 9:: sample dispensing mechanism
- 10:: sample nozzle
- 11, 13:: reagent dispensing mechanism
- 12, 14:: reagent nozzle
- 15:: cleaning mechanism
- 16:: spectrophotometer
- 17, 18:: stirring mechanism
- 19:: cleaning tank
- 20, 21:: cleaning tank
- 22, 23:: cleaning tank
- 24:: control unit
- 25:: syringe
- 26:: tube
- 27:: solenoid valve
- 28:: liquid feeding pump
- 29:: water supply pump
- 30:: plunger
- 31:: motor

## Claims

1. An automatic analyzer, comprising:
a dispensing mechanism configured to dispense a reagent or a sample into a reaction container by operating a syringe connected to a nozzle, wherein
after the syringe performs an operation of aspirating a predetermined amount of the reagent or the sample in a state where the nozzle is immersed under a liquid surface in a reagent container or a sample container,
the syringe performs an air aspiration operation of aspirating air and an air discharge operation of discharging a part of the aspirated air during movement of the nozzle from the reagent container or the sample container to the reaction container, and
after the nozzle moves to the reaction container, the syringe performs an operation of discharging a rest of the aspirated air and the predetermined amount of the reagent or the sample to the reaction container.

2. The automatic analyzer according to claim 1, wherein
an operation amount of the air discharge operation is equal to or larger than a backlash operation setting amount of the dispensing mechanism.

3. The automatic analyzer according to claim 2, wherein
an operation amount of the air aspiration operation is smaller than an operation amount of the operation of aspirating the reagent or the sample.

4. The automatic analyzer according to claim 1, wherein
the syringe performs the air aspiration operation without performing the discharge operation, after performing the operation of aspirating the reagent or the sample.

5. The automatic analyzer according to claim 4, further comprising:
a cleaning tank configured to clean the nozzle with cleaning water, wherein
after the nozzle is cleaned, the syringe performs an operation of aspirating segmented air separating the reagent or the sample from system water, and then performs the operation of aspirating the reagent or the sample without performing the discharge operation.

6. The automatic analyzer according to claim 4, further comprising:
a cleaning tank configured to clean the nozzle with cleaning water, wherein
after the nozzle is cleaned, the syringe aspirates the reagent or the sample without aspirating the air.

7. The automatic analyzer according to claim 1, further comprising:
a cleaning tank configured to clean the nozzle with cleaning water, wherein
after the nozzle is cleaned, the syringe continuously performs the aspiration operation twice or more during movement of the nozzle from the cleaning tank to the reaction container through the reagent container or the sample container.

8. The automatic analyzer according to claim 1, wherein
an operation speed of the air discharge operation is lower than an operation speed of the operation of aspirating the reagent or the sample.
